# EUROPÄISCHE PATENTSCHRIFT

(11) **EP 0 335 108 B1**
(45) Veröffentlichungstag und Bekanntmachung des Hinweises auf die Patenterteilung: **27.04.1994**
(21) Anmeldenummer: 89103226.0
(22) Anmeldetag: 24.02.1989
(51) Int. Cl.: B29D 29/06, B29C 43/24

(54) **Einrichtung zur Herstellung von bahnförmigen Kautschukprodukten**
Device for the production of webbed rubber products
Dispositif de fabrication de produits élastomères en forme de bande

(30) Priorität: 30.03.1988 DE 3810810
(43) Veröffentlichungstag der Anmeldung: 04.10.1989
(73) Patentinhaber: Continental Aktiengesellschaft, 30165 Hannover (DE)
(72) Erfinder: Klabunde, Karlheinz, D-3007 Gehrden 1 (DE); Körber, Werner, D-3222 Freden (DE); Specht, Hans, D-3410 Northeim (DE)

(56) Entgegenhaltungen:
- DE-A- 1 951 983
- FR-A- 1 518 200
- FR-A- 2 207 014
- FR-A- 2 294 821
- FR-A- 2 317 086
- FR-A- 2 338 121
- US-A- 3 348 585

## Beschreibung

Die Erfindung betrifft eine Einrichtung zur Herstellung von bahnförmigen Kautschukprodukten und deren flächige Verbindung zu Fördergurten aus Kautschuk, im wesentlichen bestehend aus einer Abwickelstation zum Zuführen einer zu verarbeitenden Gewebebahn, einer Kalanderstation zum Kalandrieren des eingefütterten Kautschukmaterials und Belegen der Gewebebahn und einer Aufnahmestation zur Aufnahme der kalandrierten Produkte, wobei die Kalanderstation mindestens fünf Kalanderwalzen umfaßt, die aus zwei parallel zueinander angeordneten, vertikalen Walzengruppen besteht, die miteinander in Wirkverbindung stehen.

Eine derartige Einrichtung, wie sie beispielsweise in der DE-A-25 28 219 beschrieben ist, dient der kontinuierlichen Herstellung von langen, bahnförmigen Kautschukprodukten, insbesondere von Fördergurten, die mit einer in Längsrichtung besonders belastbaren Verstärkungseinlage versehen sind. Um ihre Verrottung zu vermeiden, sind derartige Verstärkungseinlagen von allen Seiten mit Gummi zu umgeben. Dazu wird bei der bekannten Einrichtung die Verstärkungseinlage von einer Abwickelstation in einen Kalander eingeführt, wobei von oben und von unten jeweils eine Kautschukbahn, die auf separaten Abwickelstationen bevorratet sind, gegen die verstärkende Gewebeeinlage geführt und in dem Kalander miteinander verbunden.

Da nicht jede gewünschte Plattendicke, beispielsweise durch Vergrößerung des Walzenspaltes, hergestellt werden kann, da sonst Luftblasen in die Platten eingeschlossen werden können, müssen dickere Platten doubliert, d.h., vervielfacht werden. Dazu ist aus der DE 26 01 265 eine Einrichtung bekannt, bei der zwei Plattenbahnen zwischen zwei sich gegeneinander drehende Walzen eingefüttert und zwischen einer dritten Walze zusammengefügt, also doubliert und anschließend einer Abwickelstation zugeführt werden.

Derartige Plattenbahnen werden üblicherweise mit Hilfe von Spritzmaschinen hergestellt, die einen Breitspritzkopf aufweisen, mit dem ein dem gewünschten Artikelprofil entsprechendes Profil vorgeformt werden kann. Durch die Reibung an den Kanten des Mundstücks werden jedoch die Materialpartikel unterschiedlich abgebremst und es entstehen Spannungen innerhalb des Profils. Aus der US-A-3,871,810 ist es dazu bekannt, dem Mundstück eine Walze zum Nachkalibrieren nachzuordnen. Die dabei erzeugten Platten sind Halbzeuge, die einer Weiterverarbeitung in einer weiteren Anlage zugeführt werden müssen.

Aus der FR-A-1 518 200 ist ein Fünf-Walzen-Kalander bekannt, der von einem Breitschlitzextruder gespeist wird. Die Verstellmöglichkeiten dieses Fünf-Walzen-Kalanders sind aufgrund seiner Walzenanordnung äußerst beschränkt. Der zweite Walzenspalt ist technisch nur sehr aufwendig einstellbar.

Aus der US-A-3 348 585 ist das Belegen einer aus Drahtseilen bestehenden Verstärkungseinlage beziehungsweise Festigkeitsträger eines Fördergurtes bekannt. Dieses Gummieren der Verstärkungslage wird in einer separaten Anlage durchgeführt. Die hergestellte Karkasse wird aufgewickelt und der späteren Konfektion in einer besonderen Einrichtung zugeführt.

Der Erfindung liegt die Aufgabe zugrunde, eine Einrichtung der eingangs beschriebenen Art zu schaffen, mit der sämtliche Arbeitsgänge zur Herstellung eines aus Kautschuk bestehenden Fördergurtes durchgeführt werden können.

Die Aufgabe wird erfindungsgemäß durch die Merkmale des Patentanspruchs 1 gelöst. Durch diese Maßnahmen wird eine Einrichtung geschaffen, die eine Vielzahl von unterschiedlichen Funktionen erfüllt und mit der sämtliche zur Herstellung eines Fördergurts erforderlichen Arbeitsschritte in einer Anlage durchgeführt werden können. So kann durch Einfüttern von plastifiziertem Kautschuk in den ersten Walzenspalt eine Rohplatte hergestellt werden, die in dem zweiten Walzenspalt nachkalibriert und in dem dritten Walzenspalt fertigkalibriert werden kann. Die fünfte Kalanderwalze ist dabei ohne Funktion.

Diese so hergestellte Platte kann mit der gleichen Anlage doubliert werden, indem sie in den zweiten Walzenspalt und eine andere, in gleicher Weise vorgefertigte Platte in den vierten Walzenspalt eingeführt und beide Platten in dem dritten Walzenspalt gegeneinander geführt und miteinander verbunden werden. Dabei kann die erste Kalanderwalze ohne Funktion sein oder in oben beschriebener Weise der Ausformung der oberen Gummiplatte dienen.

Bevor sie mit dem Trag- und dem Laufstreifen versehen werden, werden die Gewebeeinlagen zur besseren Haftung beidseitig gummiert. Auch dieser Arbeitsgang kann in der erfindungsgemäßen Anlage durchgeführt werden. Dazu wird die Gewebeeinlage, die in bekannten Speicherstationen vorgehalten wird, in den dritten Walzenspalt eingezogen, während gleichzeitig von oben eine durch den zweiten Walzenspalt eingefütterte obere Gummiplatte und von unten eine durch den vierten Walzenspalt eingefütterte zweite Gummiplatte gegen die Gewebeeinlage geführt und alle drei Lagen miteinander verbunden werden. Die erste Walze ist dabei außer Funktion.

Zur Fertigstellung des Fördergurtes, dh, zum Decken der Karkasse, die entsprechend dem oben beschriebenen Arbeitsgang vorgefertigt ist, ist es vorgesehen, daß der dickere Tragstreifen mittels eines Extruders mit Breitspritzkopf in einen ersten Walzenspalt zwischen einer ersten Kalanderwalze und einer zweiten Kalanderwalze einer mindestens fünf Kalanderwalzen aufweisenden Kalanderstation eingefüttert, in einem zweiten Walzenspalt zwischen einer zweiten Kalanderwalze und einer dritten Kalanderwalze nachkalibriert und einem dritten Walzenspalt zwischen einer dritten Kalanderwalze und einer vierten Kalanderwalze eingefüttert wird, die vorgefertigte Karkasse unter einer fünften Kalanderwalze hindurch in den vierten Walzenspalt zwischen der vierten Kalanderwalze und der fünften Kalanderwalze eingefüttert wird und die Karkasse laufseitig und an den Kanten in ebenfalls eingefütterten, plastifizierten Gummi eingebettet wird, und in dem dritten Walzenspalt aus dritter Kalanderwalze und vierter Kalanderwalze die dreiseitig mit Gummi eingehüllte Karkasse mit einem tragseitigen Tragstreifen abgedeckt wird, der mittels des Extruders mit Breitspritzkopf in den ersten 5 Walzenspalt eingefüttert und in einem zweiten Walzenspalt endkalibriert wurde, wobei die Karkasse mit seitlichen Gummikanten umformt wird, die auf der dem Walzenspalt abgewandten Seite seitlich beschnitten und die abgeschnittenen Ränder wieder in den vierten Walzenspalt zwischen der vierten Kalanderwalze und der fünften Kalanderwalze eingefüttert werden.

Zum Einfüttern des plastifizierten Kautschukmaterials ist es vorteilhaft, dieses mit Hilfe eines mit einem Breitspritzkopf versehenen Extruders in den ersten Walzenspalt einzufüttern. Der so hergestellte Fördergurt läuft in eine dem dritten Walzenspalt nachgeordnete Aufnahmestation, beispielsweise eine Kühlstrecke und einen Wickeltisch ein und kann von dort seitlich entnommen werden.

Weitere vorteilhafte Maßnahmen sind in den Unteransprüchen beschrieben. Die Erfindung ist in der beiliegenden Zeichnung dargestellt und wird nachfolgend näher beschrieben; es zeigt:
- Fig. 1: die Seitenansicht der gesamten Anlage mit Abwickelstation, Kalanderstation und Aufwickelstation;
- Fig. 2: die Detaildarstellung der Kalanderwalzen mit einem, dem ersten Walzenpaar zugeordneten Extruder;
- Fig. 3: den Schnitt durch einen fertigen Fördergurt, vor und nach dem seitlichen Beschneiden.

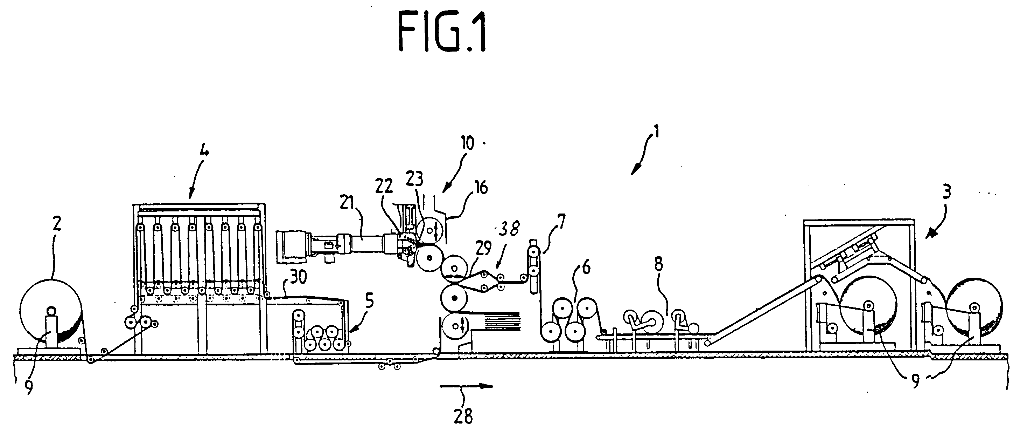

Die in der Fig. 1 dargestellte Einrichtung 1 besteht im wesentlichen aus einer Abwickelstation 2, auf der auf Wickelböcken 9 aufgewickeltes Vormaterial bevorratet wird, einer Kalanderstation 10 und einer Aufwickelstation 3, in der das von der Kalanderstation kommende Vor- oder Fertigprodukt ebenfalls auf Wickelböcken 9 aufgewickelt wird.

Um bei der Beschichtung von Gewebebahnen 30 eine kontinuierliche Bearbeitung zu ermöglichen, ist der Kalanderstation 10 eine Speicherstation 4 vorgeschaltet, mit der über Spannungsrückhaltungen 5 das einlaufende Gut bevorratet und unter Spannung gehalten wird. Das aus der Kalanderstation 10 kommende Halb- oder Fertigprodukt kann in eine Kühlstrecke 6 und/oder eine Ausgleichsvorrichtung 7 einlaufen und/oder einem Wickeltisch 8 oder einem Doublierwerk 38 zugeführt werden.

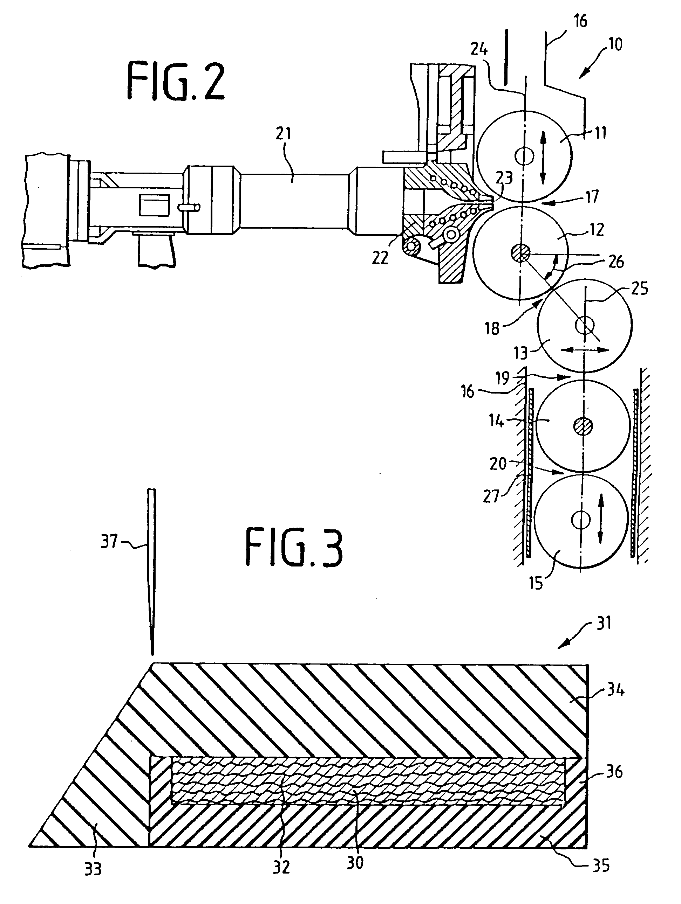

Die in der Fig. 2 dargestellte Kalanderstation 10 besteht im wesentlichen aus einer ersten Kalanderwalze 11 und einer senkrecht darunter angeordneten zweiten Kalanderwalze 12. Bei der gezeigten Ausführungsform ist die erste Kalanderwalze 11 höhenverstellbar und die zweite Kalanderwalze 12 feststehend in einem Walzenständer 16 angeordnet. Zwischen der ersten Kalanderwalze 11 und der zweiten Kalanderwalze 12 ist ein erster Walzspalt 17 vorhanden, der in seiner Höhe durch die Höhenverstellung der ersten Kalanderwalze 11 variabel ist.

Parallel zu der ersten vertikalen Walzengruppe 24, bestehend aus der ersten Kalanderwalze 11 und der zweiten Kalanderwalze 12, verläuft eine zweite vertikale Walzengruppe 25, die eine dritte Kalanderwalze 13, eine vierte Kalanderwalze 14 und eine fünfte Kalanderwalze 15 umfaßt. Die dritte Kalanderwalze 13 ist dabei die oberste der zweiten Walzengruppe 25 und um einen vorbestimmten Winkel 26 aus der Horizontalen gegenüber der zweiten Kalanderwalze 12 herabgesetzt. Der Winkel 26, um den die dritte Kalanderwalze 13 schräg unterhalb der zweiten Kalanderwalze 12 angeordnet ist, beträgt ca. 10 bis 45 Grad, vorzugsweise beträgt er 30 Grad.

Die dritte Kalanderwalze 13 ist horizontal beweglich, so daß der zweite Walzenspalt 18 zwischen ihr und der zweiten Kalanderwalze 12 variiert werden kann, während gleichzeitig der dritte Walzenspalt 19 zwischen der dritten Kalanderwalze 13 und der feststehenden vierten Kalanderwalze 14 im wesentlichen konstant bleibt.

Senkrecht unterhalb der vierten Kalanderwalze 14 ist eine fünfte Kalanderwalze 15 angeordnet. Dieses Walzenpaar 14 und 15 bildet zwischen sich einen vierten Walzenspalt 20. Die fünfte Kalanderwalze 15 ist wiederum senkrecht höhenverstellbar, so daß auch der vierte Walzenspalt 20 variiert werden kann. Bei einer anderen Ausführungsform ist die fünfte Kalanderwalze 15 um einen vorbestimmten Winkel schräg unterhalb der vierten Kalanderwalze 14 und in der Vertikalen parallel zu dieser angeordnet.

Die vierte Kalanderwalze 14 und die fünfte Kalanderwalze 15 sind in einem gemeinsamen Walzenblock 27 gelagert. Die vierte Kalanderwalze 14 ist in diesem Walzenblock 27 feststehend und die fünfte Kalanderwalze 15 in ihrer Höhe variabel; gemeinsam sind diese beiden Walzen 14 und 15 mit dem Walzenblock 27 höhenverstellbar, so daß auch der dritte Walzenspalt 19 zwischen der dritten Kalanderwalze 13 und der vierten Kalanderwalze 14 in seiner Höhe variabel ist.

Wie die Fig. 2 weiter zeigt, ist dem ersten Walzenpaar 11 und 12 ein Extruder 21 zugeordnet, in dem Kautschukmaterial plastifiziert und mittels eines Breitspritzkopfes 22 mit einem entsprechenden Mundstück 23 vorprofiliert dem ersten Walzenspalt 17 zugeführt werden kann.

Der Extruder 21 liegt hoch gegenüber der zweiten Walzen gruppe 25 und kann zur Ausformung vorgeformter Plattenprofile von dem ersten Walzenspalt 17 weggefahren werden. Die dabei vorgefertigten Plattenprofile 29 können zum beidseitigen Gummieren einer Gewebebahn 30 in dem dritten Walzenspalt 19 dienen. Dazu werden ein erstes Plattenprofil 29 in den zweiten Arbeitsspalt 18 und ein zweites Plattenprofil 29 in den vierten Arbeitsspalt 20 gegen die allgemeine Arbeitsrichtung 20 (Pfeil) eingefüttert, in Arbeitsrichtung 28 in den dritten Arbeitsspalt 19 eingeführt und dort mit der Gewebebahn 30 zusammengebracht.

Mit einer derartigen Einrichtung 1 können Fördergurte 31 hergestellt werden, wie sie in der Fig. 3 im Schnitt dargestellt sind. Ein derartiger Fördergurt 31 besteht im wesentlichen aus einem mehrlagigen Gewebeband 32, das auf seiner Oberseite mit einem dickeren Traggummi 34 und an seiner Unterseite mit einem dünneren Laufgummi 35 umgeben ist. Das mehrlagige Gewebeband 32 besteht aus einer Vielzahl von einzelnen Gewebebahnen 30, die einzeln in der oben beschriebenen Weise gefertigt, in einer separaten Anlage übereinander gelegt und miteinander verbunden worden sind.

Um die Verrottung eines derartigen Gewebebandes 32 zu vermeiden, sind auch seine Seiten mit Gummikanten 36 umgeben. Dazu wird bei dem oben beschriebenen Decken der Karkasse bzw. des Gewebebandes 32 ein seitlicher Überstand 33 erzeugt, der mit dem Walzenspalt 19 nachgeordneten seitlichen Scheibenmessern 37 beschnitten wird. Die Gummikanten 36 betragen dabei etwa 0,5 bis 1,2, vorzugsweise 0,7 x der Dicke des gesamten Fördergurts 31. Die seitlich abgeschnittenen Überstände 33 können in den unteren, den vierten Walzenspalt 20 eingefüttert und so wieder verwendet werden. Der vierte Walzenspalt 20 ist dabei auf ein Spaltmaß eingestellt, das der Addition aus der Karkassendicke + der laufseitigen Traggummibeschichtung entspricht. Zum seitlichen Anfahren der Gummikanten 36 werden mit ca. 100 mm Abstand von den Kanten der Gewebelagen 30 nicht dargestellte Begrenzungsbacken eingerichtet. Durch Einfütterung von plastifiziertem Gummi in den vierten Walzenspalt 20 wird die Gewebelage 30 laufseitig und an ihren Kanten mit bis zu 100 mm breit in Gummi eingebettet.

## Patentansprüche

1. Einrichtung zur Herstellung von bahnförmigen Kautschukprodukten und deren flächige Verbindung zu Fördergurten aus Kautschuk, im wesentlichen bestehend aus einer Abwickelstation (2) zum Zuführen einer zu verarbeitenden Gewebebahn (30), einer Kalanderstation (10) zum Kalandrieren des eingefütterten Kautschukmaterials und Belegen der Gewebebahn (30) und einer Aufnahmestation zur Aufnahme der kalandrierten Produkte, wobei die Kalanderstation (10) mindestens fünf Kalanderwalzen (11, 12, 13, 14, 15) umfaßt, die aus zwei parallel zueinander angeordneten, vertikalen Walzengruppen (24, 25) besteht, die miteinander in Wirkverbindung stehen,
**dadurch gekennzeichnet, daß** die aus einer ersten Kalanderwalze (11) und einer zweiten Kalanderwalze (12) bestehende erste Walzengruppe (24) oberhalb der aus einer dritten Kalanderwalze (13), einer vierten Kalanderwalze (14) und einer fünften Kalanderwalze (15) bestehenden zweiten Walzengruppe (25) angeordnet ist, wobei die dritte Kalanderwalze (13) um einen vorbestimmten Winkel (26) aus der Waagerechten gegenüber der zweiten Kalanderwalze (12) versetzt ist, und daß die erste Kalanderwalze (11) vertikal verschiebbar und die zweite Kalanderwalze (12) feststehend ist, und daß in der zweiten Walzengruppe (25) die dritte Kalanderwalze (13) horizontal verschiebbar, die fünfte Kalanderwalze (15) vertikal verschiebbar und die vierte Kalanderwalze (14) feststehend ist, wobei die vierte Kalanderwalze (14) und die fünfte Kalanderwalze (15) in einem gemeinsamen Walzenblock (27) vertikal verschiebbar sind, und daß dem ersten Walzenspalt (17) zwischen der ersten Kalanderwalze (11) und der zweiten Kalanderwalze (12) ein Extruder (21) zur Einfütterung des zu verarbeitenden Kautschukmaterials zugeordnet ist.

2. Einrichtung nach Anspruch 1, dadurch gekennzeichnet, daß der Extruder (21) mit einem Breitspritzkopf (28) versehen ist und in der allgemeinen Arbeitsrichtung (28) der Kalanderstation (10) arbeitet.

3. Einrichtung nach den Ansprüchen 1 bis 2, dadurch gekennzeichnet, daß der Extruder (21) von den Kalanderwalzen (11, 12) zur externen Fertigung entfernbar ist.

4. Einrichtung nach den Ansprüchen 1 bis 3, dadurch gekennzeichnet, daß zwischen der dritten Kalanderwalze (13) und der vierten Kalanderwalze (14) ein dritter Walzenspalt (19) gebildet ist und diesem dritten Walzenspalt (19) ein Doublierwerk (38) nachgeordnet ist.

5. Verfahren zur Herstellung von gewebeverstärkten Kautschukbahnen, insbesondere zur Herstellung von Fördergurten, mittels eines mehrwalzigen Kalanders, wobei der in einem Extruder plastifizierte Kautschuk mit einem Breitspritzkopf in einen ersten Walzenspalt zwischen einer ersten und einer zweiten Kalanderwalze einer mindestens fünf Kalanderwalzen aufweisenden Kalanderstation eingefüttert und in einem zweiten Walzenspalt zwischen der zweiten Walze und einer dritten Kalanderwalze nachkalibriert und in einem dritten Walzenspalt zwischen der dritten Walze und einer vierten Kalanderwalze zu einer Kautschukplatte endkalibriert wird,
dadurch gekennzeichnet,
daß eine erste vorgefertigte Kautschukplatte in den Walzenspalt zwischen der zweiten Kalanderwalze und der dritten Kalanderwalze und eine zweite vorgefertigte Kautschukplatte in den Walzenspalt zwischen der vierten Kalanderwalze und der fünften Kalanderwalze der Kalanderstation eingefüttert werden und die erste Kautschukplatte und die zweite Kautschukplatte in dem dritten Walzenspalt zwischen der dritten Kalanderwalze und der vierten Kalanderwalze zusammengeführt und in einem dem dritten Walzenspalt nachgeordneten Doublierwerk doubliert werden,
daß vor oder nach dem Doublieren eine weitere vorgefertigte Platte in den Walzenspalt zwischen der zweiten Kalanderwalze und der dritten Kalanderwalze und eine andere vorgefertigte Platte in den Walzenspalt zwischen der vierten Kalanderwalze und der fünften Kalanderwalze der Kalanderstation eingefüttert werden, in dem Walzenspalt zwischen der dritten Kalanderwalze und der vierten Kalanderwalze eine vorgefertigte Gewebebahn eingefüttert wird und die weitere Platte und die andere vorgefertigte Platte jeweils von einer Seite an diese Gewebebahn herangeführt und alle drei Lagen in dem Walzenspalt miteinander verbunden werden,
und daß dann zum Decken der vorgefertigten Karkasse, insbesondere zur Herstellung eines Fördergurtes der einen oben liegenden dickeren Tragstreifen und einen unten liegenden dünneren Laufstreifen aufweist, der dickere Tragstreifen mittels eines Extruders mit Breitspritzkopf in den ersten Walzenspalt zwischen der ersten Kalanderwalze und der zweiten Kalanderwalze der mindestens fünf Kalanderwalzen aufweisenden Kalanderstation eingefüttert, in dem zweiten Walzenspalt zwischen der zweiten Kalanderwalze und der dritten Kalanderwalze nachkalibriert und in dem dritten Walzenspalt zwischen der dritten Kalanderwalze und der vierten Kalanderwalze eingefüttert wird, die vorgefertigte Karkasse unter der fünften Kalanderwalze hindurch in den vierten Walzenspalt zwischen der vierten Kalanderwalze und der fünften Kalanderwalze eingefüttert wird und die Karkasse laufseitig und an den Kanten in ebenfalls eingefütterten, plastifierten Gummi eingebettet wird, und in dem dritten Walzenspalt aus dritter Kalanderwalze und vierter Kalanderwalze die dreiseitig mit Gummi eingehüllte Karkasse mit einem tragseitigen Tragstreifen abgedeckt wird, der mittels des Extruders mit Breitspritzkopf in den ersten Walzenspalt eingefüttert und in dem zweiten Walzenspalt endkalibriert wurde.

6. Verfahren nach Anspruch 5, dadurch gekennzeichnet, daß die Karkasse mit seitlichen Gummikanten umgeben wird, die seitlichen Gummikanten auf der dem Walzenspalt abgewandten Seite seitlich beschnitten und die abgeschnittenen Ränder wieder in den vierten Walzenspalt zwischen der vierten Kalanderwalze und der fünften Kalanderwalze eingefüttert werden.

## Claims

1. Arrangement for producing web-like rubber products and for bonding them surface-to-surface to form conveyor belts from rubber, substantially comprising an unwinding station (2) for supplying a fabric web (30), which is to be processed, a calendering station (10) for calendering the fed-in rubber material and for covering the fabric web (30), and a receiving station for receiving the calendered products, the calendering station (10) including at least five calendering rollers (11, 12, 13, 14, 15) and comprising two vertical roller groups (24, 25), which are disposed parallel to each other and are in operative connection with each other, characterised in that the first roller group (24), which comprises a first calendering roller (11) and a second calendering roller (12), is disposed above the second roller group (25), which comprises a third calendering roller (13), a fourth calendering roller (14) and a fifth calendering roller (15), the third calendering roller (13) being offset relative to the second calendering roller (12) by a predetermined angle (26) from the horizontal, and in that the first calendering roller (11) is vertically displaceable and the second calendering roller (12) is stationary, and in that, in the second roller group (25), the third calendering roller (13) is horizontally displaceable, the fifth calendering roller (15) is vertically displaceable and the fourth calendering roller (14) is stationary, the fourth calendering roller (14) and the fifth calendering roller (15) being vertically displaceable in a common roller block (27), and in that an extruder (21) for feeding-in the rubber material to be processed is associated with the first roller nip (17) between the first calendering roller (11) and the second calendering roller (12).

2. Arrangement according to claim 1, characterised in that the extruder (21) is provided with a wide injection head (22) and operates in the general operational direction (28) of the calendering station (10).

3. Arrangement according to claims 1 to 2, characterised in that the extruder (21) is removable from the calendering rollers (11, 12) for external manufacture.

4. Arrangement according to claims 1 to 3, characterised in that a third roller nip (19) is formed between the third calendering roller (13) and the fourth calendering roller (14), and a doubling mechanism (38) is disposed downstream of this third roller nip (19).

5. Method of producing fabric-reinforced rubber webs, more especially for the production of conveyor belts, by means of a multiple-roller calender, the rubber, which has been plasticised in an extruder provided with a wide injection head, being fed into a first roller nip between a first calendering roller and a second calendering roller of a calendering station having at least five calendering rollers and being recalibrated in a second roller nip between the second roller and a third calendering roller and being finally calibrated in a third roller nip between the third roller and a fourth calendering roller to form a rubber plate, characterised in that a first prefabricated rubber plate is fed into the rolle nip between the second calendering roller and the third calendering roller, and a second prefabricated rubber plate is fed into the roller nip between the fourth calendering roller and the fifth calendering roller of the calendering station, and the first rubber plate and the second rubber plate are brought together in the third roller nip between the third calendering roller and the fourth calendering roller and are doubled in a doubling mechanism disposed downstream of the third roller nip, in that, prior to or subsequent to the doubling process, an additional prefabricated plate is fed into the roller nip between the second calendering roller and the third calendering roller, and another prefabricated plate is fed into the roller nip between the fourth calendering roller and the fifth calendering roller of the calendering station, a prefabricated fabric web is fed into the roller nip between the third calendering roller and the fourth calendering roller, and the additional plate and the other prefabricated plate are each supplied from their respective side to this fabric web, and all three layers are interconnected in the roller nip, and in that, in order then to cover the prefabricated carcase, more especially in order to produce a conveyor belt which has an upper, thicker supporting strip and a lower, thinner tread strip, the thicker supporting strip is fed, by means of an extruder having a wide injection head, into the first roller nip between the first calendering roller and the second calendering roller of the calendering station having at least five calendering rollers, said supporting strip is recalibrated in the second roller nip between the second calendering roller and the third calendering roller and fed into the third roller nip between the third calendering roller and the fourth calendering roller, the prefabricated carcase is fed beneath the fifth calendering roller into the fourth roller nip between the fourth calendering roller and the fifth calendering roller, and the carcase is embedded on the tread side and at the edges in plasticised rubber, which has likewise been fed-in, and the carcase, which has been coated by rubber on three sides, is covered with a supporting strip on the supporting side in the third roller nip between the third calendering roller and the fourth calendering roller, said supporting strip having been fed into the first roller nip by means of the extruder, which is provided with a wide injection head, and having been finally calibrated in the second roller nip.

6. Method according to claim 5, characterised in that the carcase is surrounded by lateral rubber edges, the lateral rubber edges are laterally trimmed on the side remote from the roller nip, and the cut-off edges are fed again into the fourth roller nip between the fourth calendering roller and the fifth calendering roller.

## Revendications

1. Dispositif de fabrication de produits élastomères en forme de bande et de leur liaison de surface à des courroies de transport à base de caoutchouc, composé essentiellement d'un poste de déroulement (2) destiné à amener une bande textile (30) à traiter, d'un poste de calandrage (10), pour calandrer le matériau à base de caoutchouc alimenté et recouvrir la bande textile (30) et d'un poste de réception, servant à recevoir les produits calandrés, le poste de calandrage (10) comprenant au moins cinq rouleaux de calandrage (11, 12, 13, 14, 15), en deux groupes de rouleaux (24, 25) verticaux, installés parallèlement et reliés fonctionnellement entre eux, caractérisé en ce que le premier groupe de rouleaux (24), composé d'un premier rouleau de calandrage (11) et d'un deuxième rouleau de calandrage (12), est disposé au-dessus du deuxième groupe de rouleaux (25), composé d'un troisième rouleau de calandrage (13), d'un quatrième rouleau de calandrage (14) et d'un cinquième rouleau de calandrage (15), le troisième rouleau de calandrage (13) étant décalé de l'horizontale par rapport au deuxième rouleau de calandrage (12), de la valeur d'un angle (26) prédéterminé, et en ce que le premier rouleau de calandrage (11) est déplaçable verticalement et le deuxième rouleau de calandrage (12) tourillonne sur un axe fixe, et en ce que dans le deuxième groupe de rouleaux (25), le troisième rouleau de calandrage (13) est déplaçable horizontalement, le cinquième rouleau de calandrage (15) est déplaçable verticalement et le quatrième rouleau de calandrage (14) tourillonne sur un axe fixe, le quatrième rouleau de calandrage (14) et le cinquième rouleau de calandrage (15) étant déplaçables verticalement, en un bloc de rouleaux (27) commun, et en ce qu'une extrudeuse (21) destinée à alimenter le matériau élastomère à traiter est associée au premier espacement entre rouleaux (17), entre le premier rouleau de calandrage (11) et le deuxième rouleau de calandrage (12).

2. Dispositif selon la revendication 1, caractérisé en ce que l'extrudeuse (21) est pourvue d'une tête d'injection large (28) et travaille dans la direction de travail générale (28) du poste de calandrage (10).

3. Dispositif selon les revendications 1 à 2, caractérisé en ce que l'extrudeuse (21) peut être écartée des rouleaux de calandrage (11, 12) pour permettre une fabrication externe.

4. Dispositif selon les revendications 1 à 3, caractérisé en ce qu'entre le troisième rouleau de calandrage (13) et le quatrième rouleau de calandrage (14) est formé un troisième espacement entre rouleaux (19), un mécanisme de doublage (38) étant mis en service en aval de ce troisième espacement entre rouleaux (19).

5. Procédé de fabrication de bandes élastomères à renforcement textile, en particulier pour la fabrication de courroies de transport, au moyen d'une calandre à plusieurs rouleaux, le caoutchouc plastiqué dans une extrudeuse étant alimenté, à l'aide d'une tête d'injection large, dans un premier espacement entre rouleaux, entre un premier rouleau de calandrage et un deuxième rouleau de calandrage d'un poste de calandrage présentant au moins cinq rouleaux de calandrage et post-calibré, dans un deuxième espacement entre rouleaux, entre le deuxième rouleau et un troisième rouleau de calandrage, et soumis à un calibrage final, dans un troisième espacement entre rouleaux, entre le troisième rouleau et un quatrième rouleau de calandrage, pour donner une plaque élastomère, caractérisé en ce qu'une première plaque élastomère préfabriquée est alimentée, dans l'espacement entre rouleaux entre le deuxième rouleau de calandrage et le troisième rouleau de calandrage et une deuxième plaque élastomère préfabriquée est alimentée dans l'espacement entre rouleaux entre le quatrième rouleau de calandrage et le cinquième rouleau de calandrage du poste de calandrage et la première plaque élastomère et le deuxième plaque élastomère étant assemblées dans le troisième espacement entre rouleaux, entre le troisième rouleau de calandrage et le quatrième rouleau de calandrage et soumis à un doublage, dans un mécanisme de doublage, mis en service en aval du troisième espacement entre rouleaux, en ce qu'avant ou après doublage, une plaque préfabriquée supplémentaire est alimentée dans l'espacement entre rouleaux entre le deuxième rouleau de calandrage et le troisième rouleau de calandrage et une autre plaque préfabriquée est alimentée dans l'espacement entre rouleaux entre le quatrième rouleau de calandrage et le cinquième rouleau de calandrage du poste de calandrage, une bande textile préfabriquée étant alimentée dans l'espacement entre rouleaux entre le troisième rouleau de calandrage et le quatrième rouleau de calandrage, et la plaque supplémentaire et l'autre plaque préfabriquée étant chacune guidée au contact d'un côté sur cette bande textile et les trois couches étant reliées ensemble dans l'espacement entre rouleaux, et en ce qu'ensuite, pour recouvrir la carcasse préfabriquée, en particulier pour fabriquer une courroie de transport , présentant une bande support plus épaisse, située au-dessus et une bande de défilement plus mince, située au-dessous, la bande support plus épaisse est alimentée, au moyen d'une extrudeuse à tête d'injection large, dans le premier espacement entre rouleaux, entre le premier rouleau de calandrage et le deuxième rouleau de calandrage du poste de calandrage présentant au moins cinq rouleaux de calandrage, soumise à un post-calibrage dans le deuxième espacement entre rouleaux, entre le deuxième rouleau de calandrage et le troisième rouleau de calandrage, et est alimenté dans le troisième espacement entre rouleaux, entre le troisième rouleau de calandrage et le quatrième rouleau de calandrage, la carcasse préfabriquée étant alimentée, sous le cinquième rouleau de calandrage, en passant dans le quatrième espacement entre rouleaux, entre le quatrième rouleau e calandrage et le cinquième rouleau de calandrage, et la carcasse étant noyée, du côté du défilement et sur les bords, dans un caoutchouc plastifié, ayant été également alimenté, et la carcasse, enveloppée sur trois côté avec un caoutchouc, étant recouverte dans le troisième espacement entre rouleaux, composé du troisième rouleau de calandrage et du quatrième rouleau de calandrage, par une bande support, placée du côté de support, ayant été alimentée au moyen de l'extrudeuse à tête d'injection large, dans le premier espacement entre rouleaux, et ayant subi un calibrage final dans le deuxième espacement entre rouleaux.

6. Procédé selon la revendication 5, caractérisé en ce que la carcasse est entourée d'arêtes latérales en caoutchouc, les arêtes latérales étant découpées latéralement, du côté opposé à l'espacement entre rouleaux, et les bords découpés étant de nouveau alimentés dans le quatrième espacement entre rouleaux, entre le quatrième rouleau de calandrage et le cinquième rouleau de calandrage.
